# EUROPÄISCHE PATENTSCHRIFT

(11) **EP 0 432 511 B1**
(45) Veröffentlichungstag und Bekanntmachung des Hinweises auf die Patenterteilung: **23.08.1995**
(21) Anmeldenummer: 90121987.3
(22) Anmeldetag: 17.11.1990
(51) Int. Cl.: G01P 15/08

(54) **Optoelektronische Einrichtung**
Optoelectronic device
Dispositif optoéléctronique

(30) Priorität: 27.11.1989 DE 3939150; 05.07.1990 DE 4021455
(43) Veröffentlichungstag der Anmeldung: 19.06.1991
(73) Patentinhaber: Stribel GmbH, D-72636 Frickenhausen (DE)
(72) Erfinder: Drissler, Friedrich Dr., W-7000 Stuttgart (DE)
(74) Vertreter: Hoeger, Stellrecht & Partner

(56) Entgegenhaltungen:
- EP-A- 0 129 536
- EP-A- 0 209 097
- EP-A- 0 278 056
- DE-A- 3 231 383
- US-A- 4 595 830
- PATENT ABSTRACTS OF JAPAN vol. 10, no. 173 (P-469)(2229) 18 Juni 1986 & JP-A-61 23974

## Beschreibung

Die Erfindung betrifft einen Sensor mit einem ein Lichtstrahlenbündel in einer Ausbreitungsrichtung aussendenden Sendeelement, wobei das Lichtstrahlenbündel quer zu seiner Ausbreitungsrichtung eine über seinen Querschnitt in Abhängigkeit vom Radius variierende Intensitätsverteilung aufweist, so daß bei unterschiedlichen Radien unterschiedliche Intensitäten auftreten, mit einem das Lichtstrahlenbündel empfangenden und mindestens eine Empfangsfläche für das Lichtstrahlenbündel aufweisenden Empfangselement, mit einer Anordnung des Sendeelements relativ zum Empfangselement so, daß bei einer Einwirkung auf den Sensor das Sendeelement relativ zum Empfangselement in einer Auslenkrichtung quer zu der Ausbreitungsrichtung des Lichtstrahlenbündels bewegbar ist, und mit einer Auswerteeinrichtung, welche ein Ausgangssignal des Sensors erzeugt. Eine derartige Vorrichtung ist z.B. aus der Druckschrift DE-A-3 231 383 bekannt.

Aus der DE-OS 32 30 615 ist ein Sensor bekannt, der gemäß einem Ausführungsbeispiel mit einem als Lichtleiter ausgebildeten und das Lichtstrahlenbündel aussendenden und bei der Einwirkung auf den Sensor bewegbaren Sendeelement und einem Empfangselement versehen ist, welches das Lichtstrahlenbündel über einen Lichtwellenleiter empfängt, der dann das empfangene Licht zu einem Detektor leitet. Ein weiteres Ausführungsbeispiel sieht ein stationäres Sendeelement vor, welches entweder als Lampe oder Lampe mit Lichtleiter ausgebildet und einen beweglichen Lichtleiter umfassenden Empfangselement, wobei der Lichtleiter das Licht zum Detektor leitet. Alle Ausführungsbeispiele gemäß der DE-OS 32 30 615 sind so ausgebildet, daß einer oder mehrere Photosensoren eine von der Auslenkung des beweglichen Lichtleiters abhängige Lichtstärke empfangen, wobei auf die Art der Auswertung der Lichtstärke zu einem Ausgangssignal nicht eingegangen ist.

Aus der DE-OS 32 30 615 ist nicht erkennbar, wie eine genaue, die Auslenkung und Auslenkungsrichtung erfassende Messung durchgeführt werden kann.

Der Erfindung liegt daher die Aufgabe zugrunde, einen Sensor der gattungsgemäßen Art derart zu verbessern, daß eine genaue Erfassung der Auslenkung und der Auslenkrichtung möglich ist.

Diese Aufgabe wird durch einen Sensor gemäß Patentanspruch 1 gelöst.

Die erfindungsgemäße Lösung gibt somit im Gegensatz zu der Lösung gemäß der DE-OS 32 30 615 eine bevorzugte Möglichkeit zur exakten Erfassung von Auslenkrichtung und Auslenkung des Sendeelements relativ zum Empfangselement an.

Der eine wesentliche Punkt für die genaue Erfassung von Auslenkung und Auslenkrichtung besteht darin, daß eine Empfangsfläche in Auslenkrichtung nur von einem Teilstrahlenbündel des Lichtstrahlenbündels angestrahlt ist. Dadurch wird die Meßempfindlichkeit bei einer über dem Querschnitt des Lichtstrahlenbündels variierenden Intensitätsverteilung erheblich gesteigert, da bereits eine geringe Relativverschiebung des Lichtstrahlenbündels relativ zu der beaufschlagten Empfangsfläche das jeweils von dieser Empfangsfläche empfangene Teilstrahlenbündel und somit auch die integrale von dieser Empfangsfläche erfaßte Intensität ändert. Der weitere wesentliche Punkt für die genaue Erfassung der Auslenkung ist der, daß das Intensitätssignal mit einer Auswerteeinrichtung ausgewertet wird, die einen Prozessor umfaßt, der einerseits von der Intensitätsverteilung im Lichtstrahlenbündel als Parameter sowie der Größe und der Position der Empfangsfläche die Auslenkung ermittelt, so daß die Auswerteeinrichtung insbesondere in der Lage ist, die nicht linear mit der Relativverschiebung des Lichtstrahlenbündels zu der beaufschlagten Empfangsfläche variierende Größe des Intensitätssignals exakt auszuwerten und dadurch unabhängig von der Größe der Verschiebung des Lichtstrahlenbündels relativ zu der das Teilstrahlenbündel empfangenden Empfangsfläche die Auslenkung und auch die Auslenkrichtung exakt zu erfassen und ein möglichst genaues diesen Größen entsprechendes Ausgangssignal abzugeben.

Die erfindungsgemäße Lösung ist im Prinzip in der Lage, mit einem Empfangselement eine genaue Erfassung der Größe der Auslenkung durchzuführen. Noch besser ist es jedoch, insbesondere um größere Auslenkungen in einer Richtung zu erfassen oder Auslenkungen in zwei senkrecht zueinander stehenden Richtungen, wenn das Empfangselement mehrere voneinander getrennte Empfangsflächen aufweist, deren Intensitätssignale die Auswerteeinrichtung einzeln erfaßt. Erfindungsgemäß ist es bei diesen mehreren Empfangsflächen lediglich notwendig, daß stets eine der Empfangsflächen von einem Teilstrahlenbündel des Lichtstrahlenbündels beaufschlagt ist.

Insbesondere um große Auslenkungen in einer Richtung noch exakter erfassen zu können, ist es von Vorteil, wenn mindestens zwei Empfangsflächen in der Auslenkrichtung aufeinanderfolgend angeordnet sind, wobei es ebenfalls ausreichend ist, wenn eine der Empfangsflächen von einem Teilstrahlenbündel des Lichtstrahlenbündels beaufschlagt ist.

Um eine genaue Erfassung großer Auslenkungen in einer Auslenkebene, aufgespannt durch zwei unterschiedliche Auslenkrichtungen, beispielsweise zwei im Winkel zueinander verlaufenden Auslenkrichtungen, durchführen zu können, ist vorgesehen, daß in zwei vorgegebenen, im Winkel zueinander verlaufenden Auslenkrichtungen mindestens zwei Empfangsflächen aufeinanderfolgend angeordnet sind, so daß neben der Größe der Auslenkung auch die Auslenkrichtung und insbesondere auch Auslenkungen, deren Auslenkrichtung eine Kombination der beiden vorgegebenen Auslenkrichtungen darstellt, mit großer Genauigkeit erfaßt werden können.

Ein besonders bevorzugtes Ausführungsbeispiel sieht vor, daß in jeder Auslenkrichtung der durch zwei vorgegebene Auslenkrichtungen aufgespannten Auslenkebene mindestens zwei Empfangsflächen aufeinanderfolgend angeordnet sind. Wie bei allen vorstehenden Ausführungsbeispielen beschrieben, ist erfindungsgemäß eine genaue Erfassung der Auslenkstellung dann möglich, wenn mindestens eine Empfangsfläche von einem Teilstrahlenbündel des Lichtstrahlenbündels beaufschlagt ist. Noch genauer läßt sich jedoch die Auslenkung und insbesondere die Auslenkrichtung erfassen, wenn in jeder Auslenkstellung mindestens zwei der Empfangsflächen von jeweils unterschiedlichen Teilstrahlenbündeln des Lichtstrahlenbündels angestrahlt sind, da dann jeweils die Intensitätssignale beider Empfangsflächen zur Ermittlung der Auslenkung und Auslenkrichtung herangezogen werden können.

Im Rahmen der vorstehend beschriebenen Ausführungsbeispiele der erfindungsgemäßen Lösung besteht die Möglichkeit, als Empfangsflächen im Empfangselement mehrere Photodetektoren nebeneinander anzuordnen. Um jedoch die Weg- und Richtungsauflösung möglichst groß werden zu lassen, ist es von Vorteil, wenn das Empfangselement ein mehrere Empfangsflächen aufweisender Photodetektor ist, da in diesem die Auflösungsverluste, bestimmt durch die Abstände der Empfangsflächen, relativ zueinander, sehr gering sind.

Im einfachsten Fall ist erfindungsgemäß vorgesehen, daß der Photodetektor eine Quadrantendiode mit vier Empfangsflächen entsprechend den vier Quadranten eines rechtwinkligen Achsenkreuzes ist.

Im Rahmen der bislang beschriebenen Ausführungsbeispiele wurde nicht näher darauf eingegangen, ob das Lichtstrahlenbündel unmittelbar auf die Empfangsfläche des Empfangselements auftreffen soll oder ob dazwischengeschaltete optische Elemente angeordnet werden können. Vom Grundprinzip der vorliegenden Erfindung ausgehend ist es durchaus denkbar, den Empfangsflächen des Empfangselementes optische Übertragungselemente, beispielsweise Lichtleiter vorzuschalten. Viele optische Übertragungselemente, wie z.B. Lichtleiter oder auch Linsen verhalten sich so, daß deren Lichtübertragungseigenschaften vom Einstrahlwinkel abhängig sind. In diesem Fall sind die optischen Übertragungselemente für die hohe Auflösung des erfindungsgemäßen Sensors von Nachteil, da bei derartigen zwischengeschalteten Übertragungselementen mit der Auslenkung die Intensität nicht nur aufgrund der variierenden Intensitätsverteilung über den Querschnitt des Lichtstrahlenbündels variiert, sondern auch noch zusätzlich durch Kippwinkel zwischen der Ausbreitungsrichtung des Lichtstrahlenbündels und der bevorzugten Übertragungsrichtung dieser Übertragungselemente, so daß eine zusätzliche unterschiedliche Lichtübertragung je nach Einstrahlwinkel zu den Empfangsflächen erfolgt.

Aus diesem Grund ist eine einfache und möglichst genaue Auswertung der auf dem jeweiligen Empfangselement auftreffenden Lichtintensität dann bevorzugt möglich, wenn das Empfangselement so ausgebildet ist, daß es für jede Empfangsfläche eine vom Einstrahlwinkel zu der jeweiligen Empfangsfläche unabhängiges Intensitätssignal erzeugt, das heißt, daß optische Übertragungselemente der Empfangsfläche vorgeschaltet sein können, daß diese optischen Übertragungselemente aber so ausgebildet sein müssen, daß deren Übertragungseigenschaften, insbesondere deren Intensitätsübertragung auf die Empfangsfläche, unabhängig vom Einstrahlwinkel sind.

Ferner ist es zur Vermeidung der Intensitätsvariationen durch unterschiedliche Kippwinkel zweckmäßig, daß jede Empfangsfläche durch lichtempfindliches Detektormaterial gebildet ist, welches frei von strahlungsrichtungsabhängigen Übertragungselementen vom Lichtstrahlenbündel beaufschlagbar ist.

Bei den bislang beschriebenen Ausführungsbeispielen wurde die Ausbildung des Sendeelements nicht näher spezifiziert. So sieht ein bevorzugtes Ausführungsbeispiel vor, daß das Sendeelement einen Lichtleiter und eine an einem ersten Ende desselben angeordnete Lichtquelle umfaßt und daß an einem zweiten Ende des Lichtleiters das Lichtstrahlenbündel austritt. Diese Art der Ausbildung des Sendeelements hat den großen Vorteil, daß der Lichtleiter die Funktion übernimmt, das Lichtstrahlenbündel zu formen und andererseits das von der Lichtquelle ausgesandte Licht in einem charakteristischen Öffnungswinkelbereich erfaßt.

Hinsichtlich der Ausbildung des Lichtleiters sind mehrere Varianten denkbar. Eine Variante sieht vor, daß der Lichtleiter eine lichtleitende Faser umfaßt, wobei beispielsweise dabei denkbar ist, den Lichtleiter aus einem Bündel lichtleitender Fasern aufzubauen.

Besonders vorteilhaft ist es jedoch, insbesondere um eine sehr definierte Intensitätsverteilung über den Querschnitt des Lichtstrahlenbündels zu erreichen, wenn das Sendeelement eine einzige lichtleitende Faser umfaßt.

Zweckmäßigerweise ist, um die Relativverschiebung des Sendeelements relativ zum Empfangselement möglich zu machen, vorgesehen, daß der Lichtleiter biegeelastisch ist.

Ein besonders bevorzugtes Ausführungsbeispiel eines Lichtleiters ist ein Lichtleiter aus Polymermaterial.

Alternativ oder ergänzend zur biegeelastischen Ausbildung des Lichtleiters ist es zusätzlich denkbar, wenn der Lichtleiter an einem Gelenk, vorzugsweise einem Kardan- und einem Kugelgelenk, schwenkbar gelagert ist.

Eine weitere Alternative ist die Möglichkeit, daß der Lichtleiter in einem elastischen Lagerelement gehalten ist.

Bei den bislang beschriebenen Ausführungsbeispielen wurde nicht näher darauf eingegangen, wie groß der Öffnungswinkel dieser Lichtleiter sein soll. So sieht ein bevorzugtes Ausführungsbeispiel eines Lichtleiters einen Öffnungswinkel für das Lichtstrahlenbündel von > 30° vor, noch besser ist es jedoch, wenn das Lichtstrahlenbündel einen Öffnungswinkel von > 45° hat. Dadurch läßt sich zum einen in einfacher Weise die Bedingung erreichen, daß eine Empfangsfläche nur von einem Teilstrahlenbündel beaufschlagt ist und zum anderen läßt sich diese Bedingung mit einem geringen Abstand zwischen dem vorderen Ende des Lichtleiters und der Empfangsfläche realisieren, was wiederum zur Erhöhung der Genauigkeit der mit dem Sensor gemessenen Auslenkung beiträgt.

Um ferner den Sensor vor äußeren Einflüssen zu schützen, ist vorgesehen, daß der Lichtleiter von einem bevorzugt lichtundurchlässigen Mantel umhüllt ist, der in der Lage ist, den Lichtleiter gegen seine Umgebung in jeder Hinsicht, insbesondere gegen Streulicht, abzuschirmen.

In diesem Fall ist es ebenfalls zweckmäßig, wenn der Mantel des Lichtleiters quer zur Längsachse biegbar und in Längsrichtung bevorzugt stauchfest ausgebildet ist.

Bezüglich der Art der Lichtquelle wurden bislang ebenfalls keine näheren Angaben gemacht. So sieht eine bevorzugte Lösung der Erfindung vor, daß die Lichtquelle eine Leuchtdiode aufweist.

Bei allen bislang beschriebenen Ausführungsbeispielen des erfindungsgemäßen Sensors wurde nicht näher darauf eingegangen, durch welche Art der Einwirkung eine Relativverschiebung zwischen Sendeelement und Empfangselement erfolgen sollte. Eine bevorzugte Anwendung des erfindungsgemäßen Sensors sieht vor, daß die Relativverschiebung zwischen Sendeelement und Empfangselement durch eine Kraft erfolgt, die auf eine Sensormasse einwirkt. Dabei kann es sich insbesondere um eine Trägheitskraft handeln.

Bevorzugt wird eine Lösung, bei welcher die Sensormasse auf das Sendeelement wirkt.

Zweckmäßig ist es dabei, wenn die Einwirkung auf den Sensor zur Erzeugung des Ausgangssignals auf den Lichtleiter erfolgt, wobei insbesondere die Einwirkung auf das der Lichtquelle entgegengesetzte zweite Ende des Lichtleiters erfolgt.

Eine besonders bevorzugte Ausführungsform eines erfindungsgemäßen Sensors, zeigt daß das Sendeelement in einem Innenraum eines Gehäuses angeordnet ist.

Bei den bislang beschriebenen Ausführungsbeispielen wurde nicht näher darauf eingegangen, wie das Sendeelement in seiner Ausgangsstellung gehalten werden soll. Rein theoretisch wäre es ausreichend, das Sendeelement, beispielsweise wenn es einen Lichtleiter umfaßt, durch dessen Eigensteifigkeit in der Ausgangsstellung zu halten. Noch besser ist es jedoch, wenn das Sendeelement durch einen Stabilisator in der Ausgangsstellung gehalten ist.

Bei der Ausbildung des Stabilisators hat es sich als zweckmäßig erwiesen, wenn der Stabilisator als elastisches Element ausgebildet ist.

Besonders zweckmäßig ist es dabei, wenn der Stabilisator bei einem Kraftsensor, insbesondere einem Trägheitssensor, an der Sensormasse angreift und an dem Gehäuse abgestützt ist.

Um die Ausgangsstellung definiert festlegen zu können, ist vorgesehen, daß der Stabilisator ein Justierelement umfaßt.

Bei einem bevorzugten Ausführungsbeispiel umfaßt der Stabilisator mehrere um die Längsachse des Lichtleiters in gleichen Winkelabständen angeordnete Stabilisatorelemente.

Bei den bislang beschriebenen Ausführungsbeispielen wurde nicht näher darauf eingegangen, wie man eine unerwünscht große Relativverschiebung zwischen Sendeelement und Empfangselement vermeidet. Hierzu ist zweckmäßigerweise an dem Gehäuse ein Anschlag zur Begrenzung der Auslenkung des Sendeelements vorgesehen.

Darüberhinaus wird bei allen bislang beschriebenen Ausführungsbeispielen nicht näher darauf eingegangen, wie man ein Überschwingen der Relativverschiebung zwischen Sendeelement und Empfangselement vermeidet. Hierzu ist vorzugsweise ein die Auslenkung dämpfendes Dämpfungsmedium vorgesehen.

Die Ankopplung zwischen dem auslenkbaren Element und dem Dämpfungsmedium erfolgt vorzugsweise so, daß das auslenkbare Element mit einem das Dämpfungsmedium verdrängenden Verdrängungskörper verbunden ist.

Um bei allen Ausführungsbeispielen des erfindungsgemäßen Sensors genauer definierte Ausgangs- und Endstellungen zu erreichen, ist zweckmäßigerweise vorgesehen, daß das Sendeelement und das Empfangselement relativ zueinander justierbar sind.

Besonders günstig ist es hierbei, wenn das Sendeelement und das Empfangselement in Ausbreitungsrichtung des Lichtstrahlenbündels relativ zueinander justierbar sind.

Bei allen bislang beschriebenen Ausführungsbeispielen wurden keine Ausführungen im einzelnen zur Art der Ausbildung der Auswerteeinrichtung gemacht. Insbesondere wurde nicht näher darauf eingegangen, wie die Auswertung im einzelnen erfolgen soll.

So sieht ein besonders bevorzugtes Ausführungsbeispiel des erfindungsgemäßen Sensors vor, daß der Auswerteeinrichtung die Intensitätssignale jeder Empfangsfläche bei unterschiedlichen Auslenkstellungen als Stützstellen vorgegeben sind und daß die Ermittlung der vorliegenden Auslenkung durch Vergleich mit den Stützstellen erfolgt. Der Vorteil dieser Lösung ist darin zu sehen, daß alle nicht linearen Beziehungen zwischen der Auslenkung und der Änderung der Intensitätssignale eliminiert werden, da der Auswerteeinrichtung lediglich ein diese gesamten Beziehungen berücksichtigendes Stützstellenfeld vorgegeben wird, an Hand dessen sich die Auswerteeinrichtung bei Messung der Intensitätssignale orientiert und durch Vergleich mit dem Stützstellenfeld die Auslenkung ermittelt.

Um die Stützstellen nicht sehr dicht legen zu müssen und trotzdem eine gute Auflösung zu erreichen, ist zweckmäßigerweise vorgesehen, daß die Ermittlung der Auslenkung durch Interpolation zwischen den Stützstellen erfolgt.

Alternativ dazu ist aber auch eine Auswertung denkbar, wenn der Parametersatz die Parameter für die quer zur Ausbreitungsrichtung variierende Intensitätsverteilung des Lichtstrahlenbündels und die Parameter für die Größe und die Position der Empfangsfläche umfaßt. In diesem Fall wird anhand dieser Daten für jede Auslenkung eine Berechnung anhand einer abgespeicherten rechnerischen Beziehung, die die Intensitätsverteilung und die Parameter miteinander verknüpft, durchgeführt, wobei die gemessenen Intensitätssignale hierfür die Grundlage bilden.

Es brauchen somit keine Stützstellen vorgegeben sein, sondern es wird lediglich die Ausgangsstellung vorgegeben und alle übrigen Auslenkungen werden mit einem Rechenprogramm, basierend auf den vorgegebenen Werten, ermittelt.

Bei dieser Art der Auswertung hat es sich als zweckmäßig erwiesen, wenn der Parametersatz zur Definition einer Auslenkstellung einen Wert für das maximale Intensitätssignal der jeweiligen Empfangsfläche umfaßt.

Bei den bislang beschriebenen Ausführungsbeispielen wurde auch nicht näher spezifiziert, welche Art von Ausgangssignalen von der Auswerteeinrichtung abgegeben werden sollen. Ein vorteilhaftes Beispiel sieht vor, daß beispielsweise im Falle eines Trägheitssensors die Auswerteeinrichtung ein einer Beschleunigung des Sensors entsprechendes Ausgangssignal abgibt.

Bei allen Berechnungsarten, bei welchen kein Stützstellenfeld zur Berechnung verwendet wird, sondern ausgehend von den vorstehend genannten Parametern die Berechnung der Auslenkung erfolgt, ist es ferner zweckmäßig, wenn die Auswerteeinrichtung den Elastizitätsmodul des Lichtleiters berücksichtigt.

Ferner ist es außerdem, sofern ein Stabilisator vorgesehen ist, von Vorteil, wenn die Auswerteeinrichtung den Elastizitätsmodul des Stabilisators in Auslenkrichtung berücksichtigt, insbesondere wenn eine der Beschleunigung entsprechende Kraft gemessen werden soll.

Da der erfindungsgemäße Sensor nicht nur als solcher zur Erfassung einer eindimensionalen Einwirkung ausgebildet sein kann, sondern insbesondere auch als Sensor für Einwirkungen, deren Einwirkrichtungen in einer Auslenkebene liegen, ist es ebenfalls wünschenswert, wenn die Auswerteeinrichtung nicht nur die Auslenkung ausgehend von einer Ausgangsstellung, sondern auch gleichzeitig auch noch die Auslenkrichtung, bezogen auf eine Referenzrichtung, erfaßt und ein entsprechendes Richtungssignal abgibt.

Im vorstehenden wurde nicht näher darauf eingegangen, wie die Auswerteeinrichtung selbst aufgebaut werden soll. Besonders vorteilhaft hat sich ein Aufbau erwiesen, bei welchem die Auswerteeinrichtung einen dem Prozessor zugeordneten Festwertspeicher für die Parameter aufweist. Dieser Festwertspeicher ist beispielsweise als auswechselbares und vorprogrammiertes Festwertspeicherelement ausgebildet.

Bei der Konzipierung der Auswerteeinrichtung hat es sich günstig erwiesen, wenn das Intensitätssignal von einem Analog-Digital-Wandler umgesetzt und dem Prozessor übermittelt wird.

Angesichts der Tatsache, daß der erfindungsgemäße Sensor mitsamt seiner Auswerteeinrichtung möglichst kompakt sein soll, ist vorteilhafterweise vorgesehen, daß der Prozessor ein Mikroprozessor ist.

Dieser Mikroprozessor ist beispielsweise so ausgebildet, daß er eine das Ausgangssignal erzeugende Leistungsstufe ansteuert.

Neben dem vorstehend beschriebenen erfindungsgemäßen Sensor liegt der Erfindung ferner die Aufgabe zugrunde, einen redundanten Sensor zu schaffen, der hinsichtlich seiner Anzeige wesentlich zuverlässiger als die bisher bekannten Sensoren ist.

Diese Aufgabe wird dadurch gelöst, daß mindestens zwei im Winkel quer zueinander verlaufende Auslenkrichtungen jeweils erfassende und der Auslenkung entsprechende Ausgangssignale abgebende Sensoren so angeordnet sind, daß eine erste Auslenkrichtung des einen Sensors parallel zu der des anderen Sensors liegt und eine Auswerteeinrichtung vorgesehen ist, die im Fall gleicher Ausgangssignale der Sensoren für die erste Auslenkrichtung ein Gesamtausgangssignal abgibt. Vorzugsweise sind die diesen redundanten Sensor bildenden Sensoren so ausgebildet, daß sie eines oder mehrere der voranstehenden Merkmale mit umfassen.

Der Vorteil der erfindungsgemäßen Lösung ist somit darin zu sehen, daß die beiden Sensoren die erste Auslenkung jeweils gemeinsam erfassen und somit überprüft werden kann, ob einer der Sensoren eine Fehlanzeige macht oder nicht, was insbesondere bei empfindlichen Messungen, die keinerlei Fehler aufweisen dürfen, von großem Vorteil ist.

Besonders zweckmäßig ist es hierbei, wenn die Auswerteeinrichtung im Falle ungleicher Ausgangssignale für die erste Auslenkrichtung eine Fehlermeldung abgibt. Bei diesem Ausführungsbeispiel wird somit zusätzlich noch zur Ausschaltung von Meßfehlern ständig eine Überprüfung der Arbeit der beiden Sensoren dadurch vorgenommen, daß bei ungleichen Ausgangssignalen, die zu keinem Gesamtausgangssignal führen, sofort eine Fehlermeldung abgegeben wird, welche anzeigt, daß einer der Sensoren nicht mehr richtig arbeitet.

Das Ausführungsbeispiel, welches zwei erste Auslenkrichtungen erfassende Sensoren aufweist, kann vorzugsweise so ausgebildet sein, daß die Sensoren so angeordnet sind, daß die zweiten Auslenkrichtungen in einem Winkel quer zueinander verlaufen, so daß insgesamt der redundante Sensor, aufgebaut aus zwei Sensoren, die erste Auslenkung redundant erfaßt, während die zweiten Auslenkrichtungen der beiden Sensoren jeweils eine eigene Richtung erfassen und für diese Richtungen keine redundanten Signale abgeben. Ein derartiger redundanter Sensor wäre dann vorteilhaft, wenn beispielsweise eine Raumrichtung mit äußerster Zuverlässigkeit gemessen werden muß, während bei den anderen beiden Raumrichtungen eine einfache Messung ausreicht. Im übrigen ist davon auszugehen, daß dann, wenn die beiden Ausgangssignale für die erste Auslenkrichtung ungleich sind, auch der fehlerhafte Sensor hinsichtlich seiner zweiten Auslenkrichtung fehlerhaft arbeitet, so daß bei einer Fehlermeldung, bezogen auf die erste Auslenkrichtung, auch die Ausgangssignale für die zweite Richtung blockiert und mit einer Fehlermeldung versehen werden, so daß gleichzeitig auch eine Überprüfung der Funktion für die zweite Auslenkrichtung des jeweiligen Sensors erfolgt, obwohl in dieser zweiten Auslenkrichtung keine besondere Gegenprüfung erfolgt.

Besonders vorteilhaft im Rahmen der erfindungsgemäßen Lösung ist jedoch ein redundanter Sensor, bei welchem drei jeweils zwei in einem rechten Winkel zueinander verlaufende Auslenkrichtungen erfassende und der Auslenkung entsprechende Ausgangssignale abgebende Sensoren so angeordnet sind, daß jeweils beide Auslenkrichtungen eines Sensors parallel zu jeweils einer Auslenkrichtung von einem der anderen Sensoren verlaufen. Damit ist sichergestellt, daß sich der redundante Sensor in allen drei Raumrichtungen selbst überprüft.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: einen Längsschnitt durch ein erstes Ausführungsbeispiel;
- Fig. 2: einen Querschnitt durch das erste Ausführungsbeispiel längs Linie 2-2 in Fig. 1;
- Fig. 3: eine Draufsicht auf ein Ausführungsbeispiel eines erfindungsgemäßen Empfangselements;
- Fig. 4: eine Darstellung der Intensitätsverteilung im Lichtstrahlenbündel bei Fernfeldbedingungen;
- Fig. 5: eine Darstellung der Intensitätsverteilung im Lichtstrahlenbündel bei Nahfeldbedingungen;
- Fig. 6: eine schematische Darstellung einer Auswerteeinrichtung für das erste Ausführungsbeispiel;
- Fig. 7: einen Längsschnitt ähnlich Fig. 1 durch ein zweites Ausführungsbeispiel;
- Fig. 8: einen Schnitt ähnlich Fig. 1 durch ein drittes Ausführungsbeispiel;
- Fig. 9: einen Schnitt ähnlich Fig. 1 durch ein viertes Ausführungsbeispiel;
- Fig.10: eine schematische Darstellung eines ersten Ausführungsbeispiels eines redundanten Sensors beschränkt auf die Darstellung der Auslenkrichtungen;
- Fig.11: ein Blockschaltbild für eine Auswerteeinrichtung für das erste Ausführungsbeispiel des redundanten Sensors;
- Fig.12: eine schematische Darstellung eines zweiten Ausführungsbeispiels des redundanten Sensors ähnlich Fig.10.

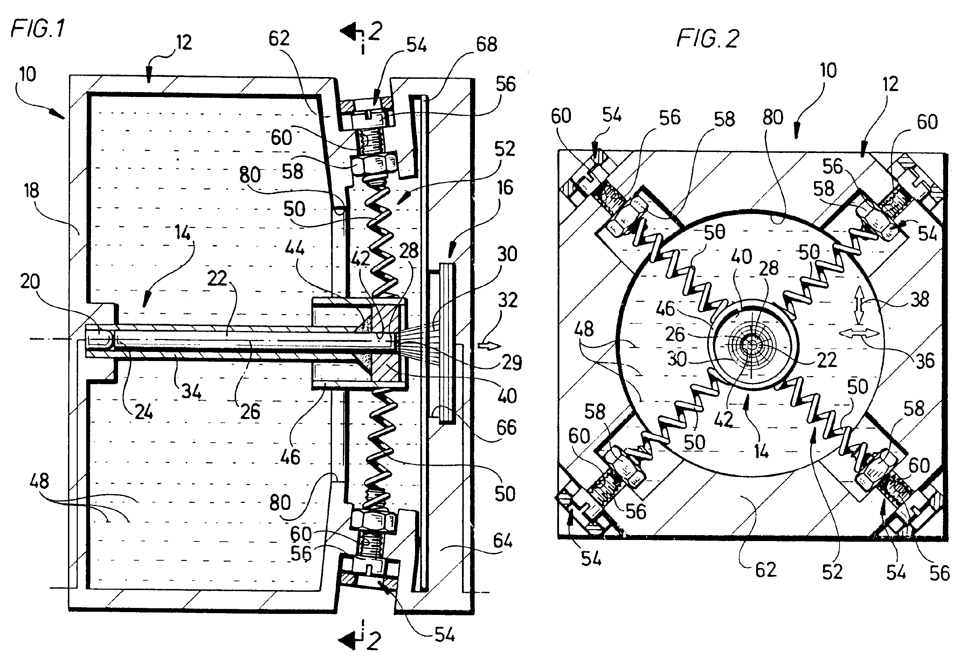

Ein als Ganzes mit 10 bezeichnetes erstes Ausführungsbeispiel eines erfindungsgemäßen Sensors, dargestellt in Fig. 1 und 2, umfaßt ein optisch dichtes Gehäuse 12, in welchem ein als Ganzes mit 14 bezeichnetes Sendeelement und ein als Ganzes mit 16 bezeichnetes Empfangselement relativ zueinander bewegbar angeordnet sind.

Vorzugsweise ist das Empfangselement 16 fest in dem Gehäuse 12 angeordnet und das Sendeelement 14 relativ zum Gehäuse 12 bewegbar.

Erfindungsgemäß umfaßt das Sendeelement 14 eine an einer ersten Seitenwand 18 des Gehäuses 12 gehaltene Leuchtdiode 20, welche in einen als Ganzes mit 22 bezeichneten Lichtleiter, vorzugsweise aus einer einzigen Polymerfaser gebildet, an einem ersten Ende 24 desselben einstrahlt. Dabei erstreckt sich der Lichtleiter 22 mit einer Längsachse 26 quer durch ein Inneres des Gehäuses 12 in Richtung auf das Empfangselement 16 und läßt an einem zweiten Ende 28 ein Lichtstrahlenbündel 30 in einer Ausbreitungsrichtung 32 austreten, welches auf das Empfangselement 16 trifft. Das Lichtstrahlenbündel 30 hat dabei einen Öffnungswinkel von ungefähr > 25°.

Zum Schutz des Lichtleiters 22 gegen chemische Einwirkungen von der Umgebung und gegen Streulicht ist dieser von einem lichtundurchlässigen Schutzmantel 34 umgeben, welcher ebenfalls noch die Leuchtdiode 20 übergreift und an der Seitenwand 18 des Gehäuses abschließt. Ferner wird der Lichtleiter an seinem zweiten Ende 28 durch ein stirnseitiges Schutzfenster 29 geschützt.

Sowohl der Lichtleiter 22 als auch die Leuchtdiode 20 sind fest an der Seitenwand 18 verankert, wobei der Lichtleiter 22 mit dem Schutzmantel 34 - wie in Fig. 2 dargestellt - sowohl in eine erste Richtung 36 als auch in eine zweite, zur ersten senkrechte Richtung 38 sowie in alle Überlagerungen derselben, flexibel bewegbar ist, so daß sich das zweite Ende 28 auf einer Kugelfläche um den Verankerungspunkt des Lichtleiters 22 bewegt.

Im Bereich des zweiten Endes 28 ist ferner an dem Lichtleiter 22 eine Sensormasse 40 gehalten, welche vorzugsweise der Lichtleiter 22 in einer zentralen Bohrung 42 durchsetzt. Die Befestigung der Sensormasse 40 erfolgt vorzugsweise durch eine Klebung 44 oder Schweißung. Die Sensormasse 40 ist ferner von einem zylindrischen Verdrängungskörper 46 umgeben, welcher dazu dient, ein Dämpfungsmedium 48 bei einer Auslenkung des zweiten Endes 28 zu verdrängen und dadurch die Auslenkbewegungen des zweiten Endes 28 des Lichtleiters 22 zu dämpfen. Dieser Verdrängungskörper 46 ist vorzugsweise als Hohlzylinder ausgebildet, welcher die Sensormasse 40 an einer Außenseite umfaßt.

Ferner greifen an der Sensormasse 40, wie insbesondere in Fig. 2 dargestellt, insgesamt vier sich zueinander in senkrechter Richtung erstreckende Stabilisatorelemente 50 an, die gemeinsam einen Stabilisator 52 bilden, welcher das zweite Ende 28 dann, wenn keine Kraft auf dieses einwirkt, in einer Ausgangsstellung hält. Die Stabilisatorelemente 50 sind vorzugsweise als Federn ausgebildet, welche sich mit ihren dem Sendeelement 14 abgewandten Ende am Gehäuse 12 abstützen, wobei zwischen dem jeweiligen Stabilisatorelement 50 und dem Gehäuse jeweils noch ein Justierglied 54 vorgesehen ist, welches dazu dient, jedem einzelnen der Stabilisatorelemente 50 eine gewünschte Vorspannung zu geben.

Das Justierglied 54 umfaßt dabei eine im Gehäuse 12 drehbar gelagerte Schraube 56, welche eine Mutter 58 trägt, auf welcher sich dann die einzelnen als Stabilisatorelemente 50 dienenden Federn abstützen. Durch Drehen der Schraube 56 ist dabei das zweite Faserende 28 in Richtung auf die Mutter 58 oder entgegengesetzt dazu verschiebbar.

Zur Lagerung der Schrauben 56 ist jeweils eine Lagerbohrung 60 in einem Mantel 62 des Gehäuses 12 vorgesehen.

Das Empfangselement 16 ist vorzugsweise als Photodiode ausgebildet, welche in einer der Seitenwand 18 gegenüber-liegend angeordneten Seitenwand 64 des Gehäuses 12, vorzugsweise in einer Ausnehmung 66 desselben, angeordnet ist. Die Ausnehmung 66 ist dabei durch ein Fenster 68 zum Dämpfungsmedium 48 hin abgedeckt.

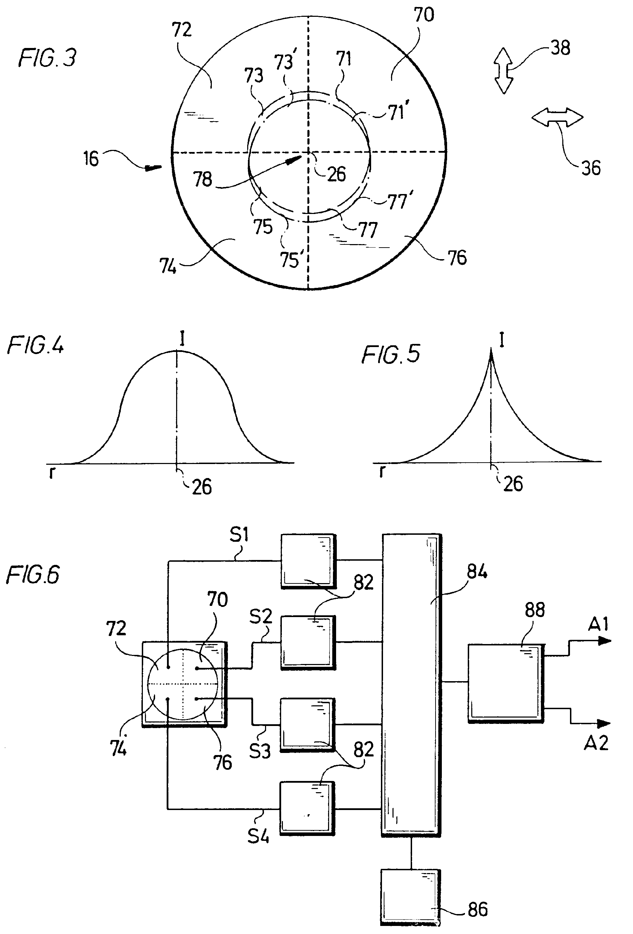

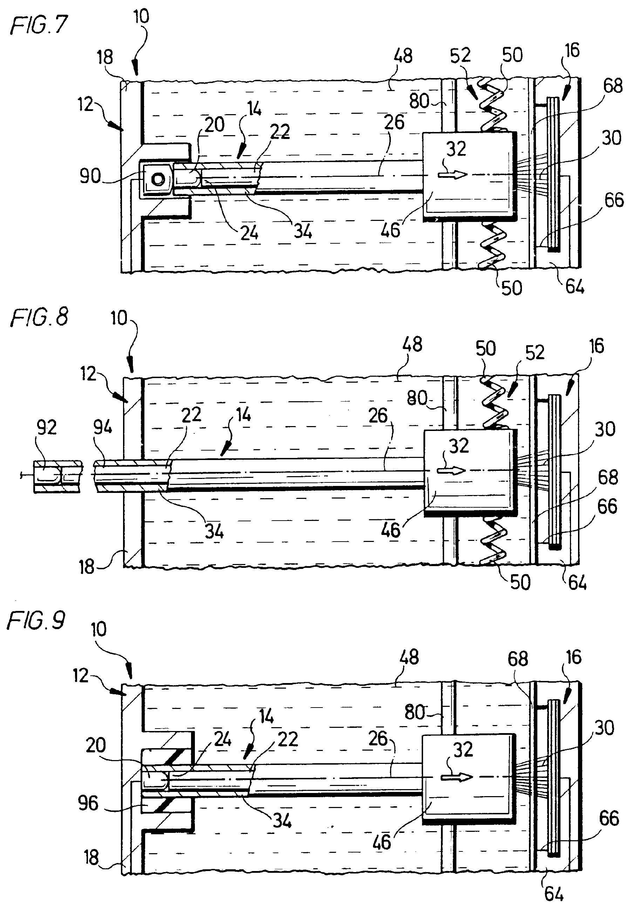

Wie in Fig. 3 dargestellt, kann die Photodiode als Quadrantendiode ausgebildet sein, welche insgesamt vier Quadranten 70, 72, 74 und 76 aufweist, welche jeweils eine Empfangsfläche bilden. Vorzugsweise kann jeder der Quadranten 70, 72, 74 und 76 noch in weitere Empfangselemente unterteilt sein. Das Lichtstrahlenbündel 30 trifft auf diese Photodiode, wie ebenfalls in Fig. 3 dargestellt, so daß innerhalb einer Querschnittsfläche 78 des Lichtstrahlenbündels 30 die Empfangsflächen 70, 72, 74 und 76, soweit sie beaufschlagt sind, ausgeleuchtet werden. Dabei hat das Lichtstrahlenbündel 30 noch innerhalb der Querschnittsfläche 78 eine vom Radius r abhängige Intensitätsverteilung I(r), die vorzugsweise die Form einer Kurve annimmt, wie in Fig. 4 und Fig. 5 dargestellt. Diese Intensitätsverteilung I(r) innerhalb der Querschnittsfläche 78 hängt vom Öffnungswinkel des Lichtstrahlenbündels 30 sowie vom Abstand des Empfangselements 16 von dem zweiten Ende 28 des Lichtleiters 22 ab und ist dann, wenn sie die Form einer Glockenkurve (Fig. 4) annimmt, die Intensitätsverteilung I(r) in größerem Abstand vom zweiten Ende 28, während in geringem Abstand vom zweiten Ende 28 die Intensitätsverteilung I(r) den in Fig. 5 dargestellten Verlauf innerhalb der Querschnittsfläche 78 hat.

Um die Auslenkung des zweiten Endes 28, ausgehend von der Ausgangsstellung, zu begrenzen, ist in dem Gehäuse 12 ein im Bereich des Verdrängungskörpers 46 angeordneter kreisringförmig und koaxial zur Längsachse 26 in Ausgangsstellung umlaufender, in Fig. 1 und 2 dargestellter Anschlagrand 80 vorgesehen, welcher die Bewegungen des Verdrängungskörpers 46, ausgehend von der Ausgangsstellung, in alle Auslenkrichtungen 36 und 38 sowie in den Kombinationen der Auslenkrichtungen 36 und 38 auf einen Maximalwert begrenzt.

In dem bevorzugten Ausführungsbeispiel ist das gesamte Gehäuse 12 mit dem Dämpfungsmedium 48 gefüllt, so daß sich in diesem der Lichtleiter 22, ausgehend von seinem Befestigungspunkt an der Seitenwand 18, in voller Länge erstreckt und auch die Stabilisatorelemente 50 in dem Dämpfungsmedium liegen, wobei die Schrauben 56 im Bereich ihrer Lagerbohrungen 60 abgedichtet den Mantel 62 des Kreises 12 durchgreifen und ebenfalls in das Dämpfungsmedium 48 hineinragen und in diesem Bereich die Muttern 58 tragen. Lediglich das Empfangselement 16 und das zweite Ende 28 des Lichtwellenleiters 22 sind durch die Fenster 68 abgeschirmt.

Das erfindungsgemäße Ausführungsbeispiel eines Sensors arbeitet nun folgendermaßen:

Im kraftfreien Zustand, das heißt ohne Einwirkung auf den Sensor, steht das Sendeelement 14 so, daß das zweite Ende 28 mit dem Lichtstrahlenbündel 30 die einzelnen Quadranten 70, 72, 74 und 76 des Empfangselements 16 jeweils gleichmäßig ausleuchtet. Diese Ausgangsstellung wird durch den Stabilisator 52 mit den Stabilisatorelementen 50 und den Justiergliedern 54 entsprechend eingestellt. In dieser Ausgangsstellung wird also jeder der Quadranten 70, 72, 74 und 76 von einem jeweils gleichgroßen Teilstrahlenbündel 71, 73, 75 und 77 des Lichtstrahlenbündels 30 ausgeleuchtet, wobei auf der Symmetrieverteilung zur Längsachse 26 des Lichtleiters 22 jeder Quadrant 70, 72, 74 und 76 auch die gleiche Intensität empfängt.

Wird dieser Sensor 10 einer Kraft, vorzugsweise einer Beschleunigung, ausgesetzt, die auf die Masse 40 einwirkt und welche eine in der durch die erste und zweite Auslenkrichtung 36 bzw. 38 aufgespannten Ebene liegende Komponente aufweist, so wirkt durch die Sensormasse eine Kraft auf das zweite Ende 28 des Lichtleiters 22 entgegen der durch die Stabilisatorelemente 50 auf dieses zweite Ende 28 ausgeübten Kraft und verschiebt somit das zweite Ende 28, ausgehend von der Ausgangsstellung, in welcher das Lichtstrahlenbündel 30 in jedem der Quadranten 70, 72, 74 und 76 die gleiche Fläche ausleuchtet, so lange, bis ein Kräftegleichgewicht zwischen der einwirkenden Kraft und der von den Stabilisatorelementen so ausgeübten Rückstellkraft eintritt, in eine Auslenkstellung, welche, wie in Fig. 3 beispielsweise strichpunktiert dargestellt, so liegt, daß im Quadrant 76 die größte Fläche ausgeleuchtet ist und in den Quadranten 70, 74 und 72 jeweils immer kleiner werdende Flächen. Darüberhinaus ist die durch die Intensitätsverteilung im Strahlenbündel 30 gemäß Fig. 4 oder Fig. 5 die in jedem Quadranten 70, 72, 74 und 76 auf-treffende Intensität nicht nur proportional zur ausgeleuchteten Fläche des jeweiligen Quadranten 70, 72, 74 und 76 sondern mit der Intensitätsverteilung I(r) noch zusätzlich gefaltet.

In der strichpunktiert dargestellten Auslenkstellung ist das Lichtstrahlenbündel 30 in unterschiedlich große Teilstrahlenbündel 71′, 73′, 75′ und 77′ aufgeteilt, die jeweils die Quadranten 70 bzw. 72 bzw. 74 bzw. 76 beaufschlagen.

Die Größe der Auslenkung und die Auslenkrichtung läßt sich nun durch Vergleich der Intensitätssignale der einzelnen Quadranten 70, 72, 74 und 76 in der Auslenkstellung mit den Intensitätssignalen in der Ausgangsstellung ermitteln, wobei die Größe der Auslenkung in die beiden Auslenkrichtungen 36 und 38 durch Vergleich der Intensitätssignale der in diesen Richtungen aufeinanderfolgenden Quadranten 70 und 72 sowie 76 und 74 bzw. 74 und 72 sowie 76 und 70 erfolgt.

Zur Erzeugung eines der Auslenkung des zweiten Endes 28 entsprechenden Ausgangssignals ist, wie in Fig. 6 dargestellt, jeder Quadrant 70, 72, 74 und 76 so aufgebaut, daß er ein integrales, der jeweils auftreffenden Intensität proportionales Intensitätssignal S1, S2, S3 und S4 erzeugt. Jedes dieser Intensitätssignale wird in einem Analog-Digital-Wandler 82 in ein digitales Signal umgesetzt und einem Mikroprozessor 84 übermittelt. Diesem Mikroprozessor 84 ist ferner noch ein Festwertspeicher 86 zugeordnet, in welchem als Parameter für die Auswertung der Intensitätssignale der Intensitätsverlauf im Lichtstrahlenbündel 30 sowie die Position der einzelnen Quadranten abgelegt ist. Mittels dieser Parameter ist der Mikroprozessor 84 somit in der Lage, eine Leistungsstufe 88 so anzusteuern, daß diese ein Ausgangssignal A1 erzeugt, welches die Größe der Auslenkung, ausgehend von der Ausgangsstellung, angibt und ein Ausgangssignal A2, welches die Richtung der Auslenkung, bezogen auf die Auslenkrichtungen 36 bzw., 38, angibt. Die Errechnung dieser Ausgangssignale A1 und A2 kann dabei auf die unterschiedlichste Art und Weise erfolgen. So wäre es beispielsweise denkbar, den Mikroprozessor so zu programmieren, daß er ein Rechenprogramm durchführt, welches unter Berücksichtigung der Intensitätsverteilung I(r) im Lichtstrahlenbündel 30 sowie der Lage der Quadranten 70 bis 76 und dem jeweils gemessenen integralen Intensitätssignal S1 bis S4 arbeitet, wobei die jeweiligen Parameter entsprechend einer Eichung bei der Herstellung des erfindungsgemäßen Sensors festgelegt wurden.

Als Alternative dazu ist es aber ebenfalls denkbar, in dem Festwertspeicher 86 repräsentative Werte für die Intensitätssignale S1 bis S4 zusammen mit den Werten für die jeweilige Auslenkung in Form von Stützstellen abzulegen und den Mikroprozessor 84 lediglich nach Auffindung der jeweils nächstliegenden Stützstellen ein Interpolationsprogramm zur genauen Ermittlung der Auslenkung und Auslenkrichtung durchführen zu lassen.

Ein zweites Ausführungsbeispiel des erfindungsgemäßen Sensors, dargestellt in Fig. 7, ist insoweit als die gleichen Bezugszeichen wie beim ersten Ausführungsbeispiel Verwendung finden, identisch wie dieses aufgebaut.

Im Gegensatz zum ersten Ausführungsbeispiel ist lediglich der Lichtleiter 22 mit seinem Schutzmantel 34 nicht flexibel, sondern mittels eines Drehgelenks 90 an der Seitenwand 18 gehalten, wobei vorzugsweise die Leuchtdiode 20 fest mit dem Lichtleiter 22 verbunden und somit ebenfalls drehbar um das Drehgelenk 90 an der Seitenwand 18 gehalten ist.

Im übrigen funktioniert das zweite Ausführungsbeispiel des erfindungsgemäßen Sensors in gleicher Weise wie das erste Ausführungsbeispiel, wobei allerdings der Elastizitätsmodul des Lichtleiters 22 keine Rolle mehr spielt und der Lichtleiter 22 nicht flexibel sein muß, sondern starr sein kann.

Bei einem dritten Ausführungsbeispiel, dargestellt in Fig. 8, ist das Sendeelement 14 insoweit anders als beim ersten Ausführungsbeispiel ausgebildet, als eine Lichtquelle 92 desselben weit entfernt vom Gehäuse 12 des Sensors angeordnet ist und die Zuführung des Lichtes über einen langen Lichtleiter 94 erfolgt, welcher durch die Seitenwand 18 durchgeführt ist und mit einem Endstück 22 entsprechend dem Lichtleiter 22 des ersten Ausführungsbeispiels, in das Gehäuse 12 hineinragt.

Dieses Ausführungsbeispiel eines Sensors stellt einen in ein Lichtleiternetzsystem integrierten Sensor dar, wobei anstelle der elektrischen Versorgungsleitung für die Leuchtdiode 20 bereits über den Lichtleiter 94, beispielsweise in Form einer flexiblen Faser, das Licht zugeführt wird.

Im übrigen ist das dritte Ausführungsbeispiel insoweit als dieselben Bezugszeichen wie beim ersten Ausführungsbeispiel Verwendung finden, identisch mit diesem aufgebaut, so daß auf die Beschreibung zum ersten Ausführungsbeispiel verwiesen werden kann.

Bei einem vierten Ausführungsbeispiel, dargestellt in Fig. 9, ist der Lichtleiter 22 in gleicher Weise wie beim zweiten Ausführungsbeispiel gemäß Fig. 7 starr und mittels eines elastischen Elements 96, beispielsweise in Form eines elastischen Rings, an der Seitenwand 18 gehalten.

Im übrigen ist auch beim vierten Ausführungsbeispiel ein Anschlagrand 80 und aber kein Stabilisator 52 vorgesehen. Alle diese Funktionen werden von dem elastischen Element 96 übernommen.

Insoweit als beim vierten Ausführungsbeispiel die gleichen Bezugszeichen wie beim ersten Ausführungsbeispiel Verwendung finden, sind die Teile mit denjenigen des ersten Ausführungsbeispiels identisch, so daß auf die Ausführungen hierzu im ersten Ausführungsbeispiel verwiesen werden kann.

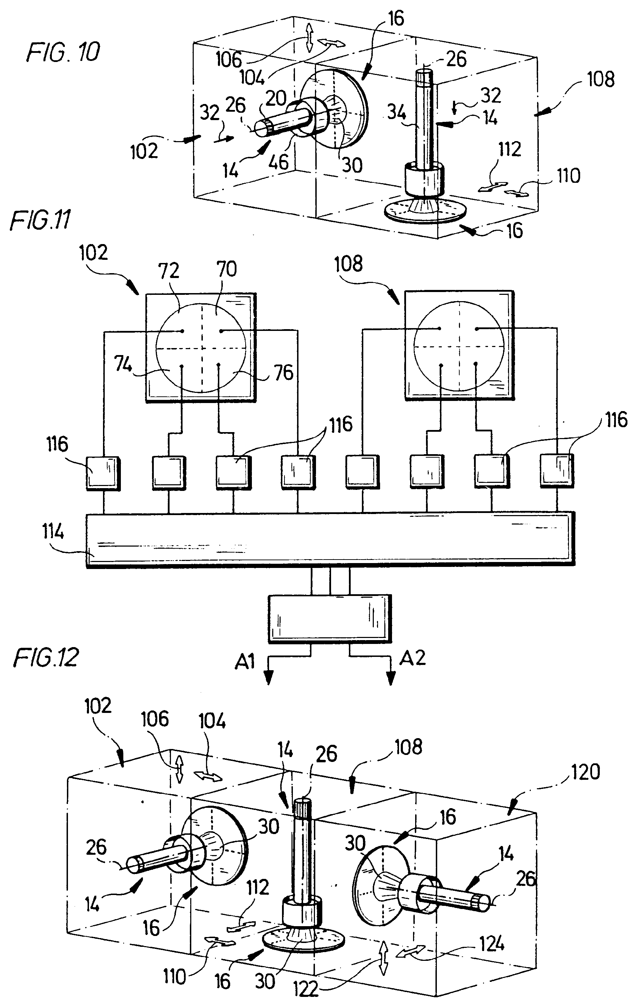

Bei einem redundanten Sensor, dargestellt in Fig. 10, sind beispielsweise zwei Sensoren gemäß einem der voranstehenden Ausführungsbeispiele nebeneinander angeordnet. Bei einem ersten Sensor 102 sind die Auslenkrichtungen 104 und 106 vorgesehen und bei einem zweiten Sensor 108 die Auslenkrichtungen 110 und 112, wobei die Auslenkrichtungen 104 und 110 parallel zueinander ausgerichtet sind.

Die Auswertung der Signale erfolgt nun, wie in Fig. 11 dargestellt, beispielsweise durch einen gemeinsamen Mikroprozessor 114, welcher sowohl die in Analog-Digital-Wandlern 116 umgesetzten Intensitätssignale des ersten Sensors 102 sowie des zweiten Sensors 108 auswertet und bezüglich der Auslenkrichtungen 104 und 110 nur dann ein Ausgangssignal abgibt, wenn beide Sensoren 102 und 108 dieselbe Auslenkung in diese Richtung anzeigen, während die Auslenkrichtungen 106 und 112 wie bei als Einzelsensoren aufgebauten Sensoren 102 und 108 ausgewertet werden.

Bei einem weiteren Ausführungsbeispiel eines redundanten Sensors ist den beiden Sensoren 102 und 108 noch ein dritter Sensor 120 zugeordnet, welcher auf Auslenkrichtungen 122 und 124 anspricht. Zusätzlich ist der dritte Sensor 120 so angeordnet, daß die Auslenkrichtung 122 parallel zur Auslenkrichtung 106 verläuft und die Auslenkrichtung 124 parallel zur Auslenkrichtung 112 und die Auslenkrichtung 104 parallel zur Auslenkrichtung 110 und somit der Mikroprozessor 114, welcher nunmehr nacheinander die Intensitätssignale aller drei Sensoren auswertet, nur dann für die jeweilige Auslenkrichtung ein Ausgangssignal abgibt, wenn jeweils beide in dieser Auslenkrichtung sensitiven Sensoren der drei Sensoren 102, 108 und 120 dasselbe Auslenksignal messen.

Dieser redundante Sensor hat den Vorteil, daß alle Sensoren 102, 108 und 120 einander gegenseitig in allen drei Raumdimensionen überwachen und somit keine Fehlmessungen erfolgen.

Beispielsweise kann der in Fig. 12 dargestellte redundante Sensor zur Beschleunigungsmessung in allen drei Raumrichtungen verwendet werden.

## Patentansprüche

1. Sensor mit einem ein Lichtstrahlenbündel (30) in einer Ausbreitungsrichtung (32) aussendenden Sendeelement (14), wobei das Lichtstrahlenbündel (30) quer zu seiner Ausbreitungsrichtung (32) eine über seinen Querschnitt in Abhängigkeit vom Radius (r) variierende Intensitätsverteilung (I(r)) aufweist, so daß bei unterschiedlichen Radien (r) unterschiedliche Intensitäten (I(r)) auftreten, mit einem das Lichtstrahlenbündel (30) empfangenden und mindestens eine Empfangsfläche (70, 72, 74, 76) für das Lichtstrahlenbündel (30) aufweisenden Empfangselement (16) mit einer Anordnung des Sendeelements (14) relativ zum Empfangselement (16) so, daß bei einer Einwirkung auf den Sensor das Sendeelement (14) relativ zum Empfangselement (16) in einer Auslenkrichtung (36, 38) quer zu der Ausbreitungsrichtung (32) des Lichtstrahlenbündels (30) bewegbar ist, und mit einer Auswerteeinrichtung (82, 84, 86, 88) welche ein Ausgangssignal des Sensors erzeugt,
**dadurch gekennzeichnet**,
daß in jeder durch eine Einwirkung auf den Sensor hervorgerufenen Auslenkstellung des Sendeelements (14) relativ zum Empfangselement (16) eine Empfangsfläche (70, 72, 74, 76) nur von einem Teilstrahlenbündel (71, 73, 75, 77) des Lichtstrahlenbündels (30) angestrahlt ist, daß das Empfangselement (16) für die Empfangsfläche (70, 72, 74, 76) ein integrales, der auf diese Empfangsfläche (70, 72, 74, 76) auftreffenden Gesamtintensität des jeweils diese anstrahlenden Teilstrahlenbündel (71, 73, 75, 77) entsprechendes Intensitätssignal (S₁, S₂, S₃, S₄) erzeugt, daß die Auswerteeinrichtung (82, 84, 86) das Intensitätssignal (S₁, S₂, S₃, S₄) erfaßt und mittels eines Prozessors (84) unter Berücksichtigung der Größe des Intensitätssignals (S₁, S₂, S₃, S₄) und eines vorgegebenen Parametersatzes, ermittelt aufgrund der über den Querschnitt in Abhängigkeit vom Radius (r) variierenden Intensitätsverteilung (I(r)) im Lichtstrahlenbündel (30) sowie der Größe und Position der Empfangsfläche (70, 72, 74 76), die Auslenkung ermittelt.

2. Sensor nach Anspruch 1, dadurch gekennzeichnet, daß das Empfangselement (16) mehrere voneinander getrennte Empfangsflächen (70, 72, 74,76) aufweist, deren Intensitätssignale (S1 bis S4) die Auswerteeinrichtung einzeln erfaßt.

3. Sensor nach Anspruch 2, dadurch gekennzeichnet, daß mindestens zwei Empfangsflächen (70, 72, 74 ,76) in der Auslenkrichtung (36, 38) aufeinanderfolgend angeordnet sind.

4. Sensor nach Anspruch 3, dadurch gekennzeichnet, daß in zwei vorgegebenen im Winkel zueinander verlaufenden Auslenkrichtungen (36, 38) mindestens je zwei Empfangsflächen (70, 72, 74, 76) aufeinanderfolgend angeordnet sind.

5. Sensor nach einem der Ansprüche 2 bis 4, dadurch gekennzeichnet, daß in jeder Auslenkstellung mindestens zwei der Empfangsflächen (70, 72, 74, 76) von jeweils unterschiedlichen Teilstrahlenbündeln (71, 73, 75, 77) des Lichtstrahlenbündels (30) angestrahlt sind.

6. Sensor nach einem der Ansprüche 2 bis 5, dadurch gekennzeichnet, daß das Empfangselement (16) ein mehrere Empfangsflächen (70, 72, 74, 76) aufweisender Photodetektor ist.

7. Sensor nach Anspruch 6, dadurch gekennzeichnet, daß der Photodetektor (16) eine Quadrantendiode ist.

8. Sensor nach einem der voranstehenden Ansprüche, dadurch gekennzeichnet, daß das Empfangselement (16) so ausgebildet ist, daß es für jede Empfangsfläche (70, 72, 74, 76) ein vom Einstrahlwinkel zwischen dem Teilstrahlenbündel (71, 73, 75, 77) und der jeweiligen Empfangsfläche (70, 72, 74, 76) unabhängiges Intensitätssignal (S₁, S₂, S₃, S₄) erzeugt.

9. Sensor nach einem der voranstehenden Ansprüche, dadurch gekennzeichnet, daß jede Empfangsfläche (70, 72, 74, 76) durch lichtempfindliches Detektormaterial gebildet ist, welches frei von strahlungsrichtungsabhängigen Übertragungselementen vom Lichtstrahlenbündel (30) beaufschlagbar ist.

10. Sensor nach einem der voranstehenden Ansprüche, dadurch gekennzeichnet, daß das Sendeelement (14) ein Lichtleiter (22) und eine an einem ersten Ende (24) desselben angeordnete Lichtquelle (20) umfaßt und daß an einem zweiten Ende (28) des Lichtleiters (22) das Lichtstrahlenbündel (30) austritt.

11. Sensor nach Anspruch 10, dadurch gekennzeichnet, daß der Lichtleiter (22) eine lichtleitende Faser umfaßt.

12. Sensor nach Anspruch 11, dadurch gekennzeichnet, daß das Sendeelement eine einzige lichtleitende Faser umfaßt.

13. Sensor nach einem der Ansprüche 10 bis 12, dadurch gekennzeichnet, daß der Lichtleiter (22) biegeelastisch ist.

14. Sensor nach einem der Ansprüche 11 bis 13, dadurch gekennzeichnet, daß der Lichtleiter (22) aus Polymermaterial ist.

15. Sensor nach einem der Ansprüche 10 bis 14, dadurch gekennzeichnet, daß der Lichtleiter (22) an einem Gelenk (90), vorzugsweise einem Kardan- oder Kugelgelenk schwenkbar gelagert ist.

16. Sensor nach einem der Ansprüche 10 bis 14, dadurch gekennzeichnet, daß der Lichtleiter (22) in einem elastischen Lagerelement (96) gehalten ist.

17. Sensor nach einem der Ansprüche 10 bis 16, dadurch gekennzeichnet, daß der Lichtleiter (22) einen Öffnungswinkel für das Lichtstrahlenbündel von > 25° aufweist.

18. Sensor nach einem der Ansprüche 10 bis 17, dadurch gekennzeichnet, daß der Lichtleiter (22) von einem bevorzugt lichtundurchlässigen Mantel (34) umhüllt ist.

19. Sensor nach Anspruch 18, dadurch gekennzeichnet, daß der Mantel (34) des Lichtleiters (22) quer zur Längsachse (26) biegbar und in Längsrichtung bevorzugt stauchfest ausgebildet ist.

20. Sensor nach einem der Ansprüche 10 bis 19, dadurch gekennzeichnet, daß die Lichtquelle (20) eine Leuchtdiode aufweist.

21. Sensor nach einem der voranstehenden Ansprüche, dadurch gekennzeichnet, daß die Relativverschiebung zwischen Sendeelement (14) und Empfangselement (16) durch eine Trägheitskraft einer Sensormasse (40) erfolgt.

22. Sensor nach Anspruch 21, dadurch gekennzeichnet, daß die Sensormasse (40) auf das Sendeelement (14) wirkt.

23. Sensor nach einem der Ansprüche 10 bis 22, dadurch gekennzeichnet, daß die Einwirkung auf den Sensor zur Erzeugung des Ausgangssignals auf den Lichtleiter (22) erfolgt.

24. Sensor nach Anspruch 23, dadurch gekennzeichnet, daß die Einwirkung auf das der Lichtquelle (20) entgegengesetzte zweite Ende (28) des Lichtleiters (22) erfolgt.

25. Sensor nach einem oder mehreren der vorstehenden Ansprüche, dadurch gekennzeichnet, daß das Sendeelement (14) in einem Innenraum eines Gehäuses (12) angeordnet ist.

26. Sensor nach einem der voranstehenden Ansprüche, dadurch gekennzeichnet, daß das Sendeelement (14) durch einen Stabilisator (52) in der Ausgangsstellung gehalten ist.

27. Sensor nach Anspruch 26, dadurch gekennzeichnet, daß der Stabilisator (52) als elastisches Element ausgebildet ist.

28. Sensor nach Anspruch 26 oder 27, dadurch gekennzeichnet, daß der Stabilisator an der Sensormasse (40) angreift und am Gehäuse (12) abgestützt ist.

29. Sensor nach einem der Ansprüche 26 bis 28, dadurch gekennzeichnet, daß der Stabilisator (52) ein Justierelement (54) umfaßt.

30. Sensor nach einem der Ansprüche 26 bis 29, dadurch gekennzeichnet, daß der Stabilisator (52) mehrere um die Längsachse (26) des Lichtleiters (22) in gleichen Winkelabständen angeordnete Stabilisatorelemente (50) umfaßt.

31. Sensor nach einem oder mehreren der vorstehenden Ansprüche, dadurch gekennzeichnet, daß an dem Gehäuse (12) ein Anschlag (80) zur Begrenzung der Auslenkung des Sendeelement (14) relativ zum Empfangselement (16) vorgesehen ist.

32. Sensor nach einem der voranstehenden Ansprüche, dadurch gekennzeichnet, daß ein die Auslenkung dämpfendes Dämpfungsmedium (48) vorgesehen ist.

33. Sensor nach Anspruch 32, dadurch gekennzeichnet, daß das auslenkbare Element (14) mit einem das Dämpfungsmedium (48) verdrängenden Verdrängungskörper (46) verbunden ist.

34. Sensor nach einem der voranstehenden Ansprüche, dadurch gekennzeichnet, daß das Sendeelement (14) und das Empfangselement (16) relativ zueinander justierbar sind.

35. Sensor nach Anspruch 34, dadurch gekennzeichnet, daß das Sendeelement (14) und das Empfangselement (16) in Ausbreitungsrichtung (32) des Lichtstrahlenbündels (30) relativ zueinander justierbar sind.

36. Sensor nach einem der voranstehenden Ansprüche, dadurch gekennzeichnet, daß der Auswerteeinrichtung (82, 84, 86) die Intensitätssignale (S1, S2, S3, S4) jeder Empfangsfläche (70, 72, 74, 76) bei unterschiedlichen Auslenkstellungen als Stützstellen vorgegeben sind, und daß die Ermittlung der vorliegenden Auslenkung durch Vergleich mit den Stützstellen erfolgt.

37. Sensor nach Anspruch 36, dadurch gekennzeichnet, daß die Ermittlung der Auslenkung durch Interpolation zwischen den Stützstellen erfolgt.

38. Sensor nach einem der voranstehenden Ansprüchen, dadurch gekennzeichnet, daß der Parametersatz die Parameter für die quer zur Ausbreitungsrichtung (32) variierende Intensitätsverteilung (I(r)) des Lichtstrahlenbündels (30) und die Parameter für die Position der Empfangsfläche (70, 72, 74, 76) umfaßt.

39. Sensor nach einem der voranstehenden Ansprüche, dadurch gekennzeichnet, daß der Parametersatz zur Definition einer Auslenkstellung einen Wert für das maximale Intensitätssignal der jeweiligen Empfangsfläche (70, 72, 74, 76) umfaßt.

40. Sensor nach einem der voranstehenden Ansprüche, dadurch gekennzeichnet, daß die Auswerteeinrichtung (82, 84, 86) ein einer Beschleunigung des Sensors entsprechendes Ausgangssignal abgibt.

41. Sensor nach Anspruch 40, dadurch gekennzeichnet, daß die Auswerteeinrichtung (82, 84, 86) den Elastizitätsmodul des Lichtleiters (22) berücksichtigt.

42. Sensor nach Anspruch 40 oder 41, dadurch gekennzeichnet, daß die Auswerteeinrichtung den Elastizitätsmodul des Stabilisators (52) in Auslenkrichtung (36, 38) berücksichtigt.

43. Sensor nach einem der voranstehenden Ansprüche, dadurch gekennzeichnet, daß die Auswerteeinrichtung (82, 84, 86) die Auslenkrichtung (36, 38), bezogen auf eine Referenz erfapt und ein entsprechendes Richtungssignal abgibt.

44. Sensor nach einem der voranstehenden Ansprüche, dadurch gekennzeichnet, daß die Auswerteeinrichtung (82, 84, 86) einen dem Prozessor (84) zugeordneten Festwertspeicher (86) für die Parameter aufweist.

45. Sensor nach einem der voranstehenden Ansprüche, dadurch gekennzeichnet, daß das Intensitätssignal (S1, S2, S3, S4) von einem Analog-Digital-Wandler (82) umgesetzt und dem Prozessor (84) übermittelt wird.

46. Sensor nach einem der voranstehenden Ansprüche, dadurch gekennzeichnet, daß der Prozessor (84) ein Mikroprozessor ist.

47. Sensor nach einem der voranstehenden Ansprüche, dadurch gekennzeichnet, daß der Prozessor (84) eine das Ausgangssignal erzeugende Leistungsstufe (88) ansteuert.

48. Redundanter Sensor, dadurch gekennzeichnet, daß mindestens zwei jeweils zwei im Winkel quer zueinander verlaufende Auslenkrichtungen (104, 106; 110, 112) erfassende und der Auslenkung entsprechende Ausgangssignale abgebende Sensoren (102, 108) nach einem der voranstehenden Ansprüche so angeordnet sind, daß eine erste Auslenkrichtung (104) des einen Sensors (102) parallel zu der ersten Auslenkrichtung (110) des anderen Sensors (108) liegt, daß beide Sensoren in der ersten Auslenkrichtung dieselbe Einwirkung erfahren und daß eine die Ausgangssignale beider Sensoren (102, 108) für die erste Auslenkrichtung (104, 110) erfassende Auswerteeinrichtung vorgesehen ist, die nur im Fall gleicher Ausgangssignale der Sensoren (102, 108) für die erste Auslenkrichtung (104, 110) ein Gesamtausgangssignal abgibt.

49. Redundanter Sensor nach Anspruch 48, dadurch gekennzeichnet, daß die Auswerteeinrichtung im Fall ungleicher Ausgangssignale für die erste Auslenkrichtung (104, 110) eine Fehlermeldung abgibt.

50. Redundanter Sensor nach Anspruch 48 oder 49, dadurch gekennzeichnet, daß die Sensoren (102, 108) so angeordnet sind, daß die zweiten Auslenkrichtungen (106, 112) in einem Winkel quer zueinander verlaufen.

51. Redundanter Sensor nach einem der Ansprüche 48 bis 50, dadurch gekennzeichnet, daß drei jeweils zwei in einem rechten Winkel zueinander verlaufende Auslenkrichtungen (104, 106; 110, 112; 122, 124) erfassende und der Auslenkung entsprechende Ausgangssignale abgebende Sensoren (102, 108, 120) so angeordnet sind, daß jeweils beide Auslenkrichtungen (104, 106; 110, 112; 122, 124) eines Sensors (102, 108, 120) parallel zu jeweils einer Auslenkrichtung (110, 122, 104, 124, 106, 112) von einem der anderen Sensoren verlaufen.

## Claims

1. Sensor comprising an emitting element (14) emitting a bundle of light rays (30) in a direction of propagation (32), said bundle of light rays (30) having transversely to its direction of propagation (32) a distribution of intensity (I(r)) varying over its cross section as a function of the radius (r) such that different intensities (I(r)) occur with different radii (r), a receiving element (16) receiving the bundle of light rays (30) and having at least one receiving surface (70, 72, 74, 76) for the bundle of light rays (30), the emitting element (14) being arranged relative to the receiving element (16) such that when the sensor is acted upon the emitting element (14) is movable relative to the receiving element (16) in a direction of deflection (36, 38) transversely to the direction of propagation (32) of the bundle of light rays (30), and an evaluating device (82, 84, 86, 88) generating an output signal of the sensor, characterized in that in each deflection position of the emitting element (14) relative to the receiving element (16), said deflection position being brought about when the sensor is acted upon, a receiving surface (70, 72, 74, 76) is illuminated only by a partial bundle of rays (71, 73, 75, 77) of the bundle of light rays (30), that the receiving element (16) generates for the receiving surface (70, 72, 74, 76) an integral intensity signal (S₁, S₂, S₃, S₄) corresponding to the total intensity impinging upon the receiving surface (70, 72, 74, 76) of the partial bundle of rays (71, 73, 75, 77) respectively illuminating this surface (70, 72, 74, 76), that the evaluating device (82, 84, 86) detects the intensity signal (S₁, S₂, S₃, S₄) and determines the deflection by means of a processor (84), taking into account the size of the intensity signal (S₁, S₂, S₃, S₄) and a specified set of parameters determined on the basis of the distribution of intensity (I(r)) in the bundle of light rays (30) varying over the cross section as a function of the radius (r) as well as the size and position of the receiving surface (70, 72, 74, 76).

2. Sensor as defined in claim 1, characterized in that the receiving element (16) has several separate receiving surfaces (70, 72, 74, 76), the intensity signals (S1 to S4) thereof being individually detected by the evaluating device.

3. Sensor as defined in claim 2, characterized in that at least two receiving surfaces (70, 72, 74, 76) are arranged in succession in the direction of deflection (36, 38).

4. Sensor as defined in claim 3, characterized in that at least two receiving surfaces (70, 72, 74, 76) are arranged in succession in each of two predetermined directions of deflection (36, 38) extending at an angle to one another.

5. Sensor as defined in any one of claims 2 to 4, characterized in that in each deflection position at least two of the receiving surfaces (70, 72, 74, 76) are illuminated by respectively different partial bundles of rays (71, 73, 75, 77) of the bundle of light rays (30).

6. Sensor as defined in any one of claims 2 to 5, characterized in that the receiving element (16) is a photodetector having several receiving surfaces (70, 72, 74, 76).

7. Sensor as defined in claim 6, characterized in that the photodetector (16) is a quadrant diode.

8. Sensor as defined in any one of the preceding claims, characterized in that the receiving element (16) is designed to generate for each receiving surface (70, 72, 74, 76) an intensity signal (S₁, S₂, S₃, S₄) independent of the angle of incidence between the partial bundle of rays (71, 73, 75, 77) and the respective receiving surface (70, 72, 74, 76).

9. Sensor as defined in any one of the preceding claims, characterized in that each receiving surface (70, 72, 74, 76) is formed by light-sensitive detector material acted upon by the bundle of light rays (30) free from transmission elements dependent on the direction of radiation.

10. Sensor as defined in any one of the preceding claims, characterized in that the emitting element (14) comprises a light guide (22) and a light source (20) arranged at a first end (24) thereof, and that the bundle of light rays (30) exits at a second end (28) of the light guide (22).

11. Sensor as defined in claim 10, characterized in that the light guide (22) comprises a light-conducting fiber.

12. Sensor as defined in claim 11, characterized in that the emitting element comprises a single light-conducting fiber.

13. Sensor as defined in any one of claims 10 to 12, characterized in that the light guide (22) is flexurally elastic.

14. Sensor as defined in any one of claims 11 to 13, characterized in that the light guide (22) is made of polymer material.

15. Sensor as defined in any one of claims 10 to 14, characterized in that the light guide (22) is mounted for swivel motion on a joint (90), preferably a universal joint or a ball-and-socket joint.

16. Sensor as defined in any one of claims 10 to 14, characterized in that the light guide (22) is held in an elastic bearing element (96).

17. Sensor as defined in any one of claims 10 to 16, characterized in that the light guide (22) has an aperture angle for the bundle of light rays of > 25°.

18. Sensor as defined in any one of claims 10 to 17, characterized in that the light guide (22) is encased by a preferably light-proof sheath (34).

19. Sensor as defined in claim 18, characterized in that the sheath (34) of the light guide (22) is designed to be flexible transversely to the longitudinal axis (26) and preferably resistant to compression in the longitudinal direction.

20. Sensor as defined in any one of claims 10 to 19, characterized in that the light source (20) comprises a light-emitting diode.

21. Sensor as defined in any one of the preceding claims, characterized in that the relative displacement between emitting element (14) and receiving element (16) is effected by an inertia force of a sensor mass (40).

22. Sensor as defined in claim 21, characterized in that the sensor mass (40) acts on the emitting element (14).

23. Sensor as defined in any one of claims 10 to 22, characterized in that it is the light guide (22) that is acted upon to cause the sensor to generate the output signal.

24. Sensor as defined in claim 23, characterized in that it is the second end (28) of the light guide (22) opposite the light source (20) that is acted upon.

25. Sensor as defined in any or several of the preceding claims, characterized in that the emitting element (14) is arranged in an interior of a housing (12).

26. Sensor as defined in any one of the preceding claims, characterized in that the emitting element (14) is held in the initial position by a stabilizer (52).

27. Sensor as defined in claim 26, characterized in that the stabilizer (52) is in the form of an elastic element.

28. Sensor as defined in claim 26 or 27, characterized in that the stabilizer engages the sensor mass (40) and is supported on the housing (12).

29. Sensor as defined in any one of claims 26 to 28, characterized in that the stabilizer (52) comprises an adjustment element (54).

30. Sensor as defined in any one of claims 26 to 29, characterized in that the stabilizer (52) comprises several stabilizer elements (50) arranged at identical angular spacings around the longitudinal axis (26) of the light guide (22).

31. Sensor as defined in any or several of the preceding claims, characterized in that a stop (80) is provided on the housing (12) for limiting the deflection of the emitting element (14) relative to the receiving element (16).

32. Sensor as defined in any one of the preceding claims, characterized in that a damping medium (48) for damping the deflection is provided.

33. Sensor as defined in-claim 32, characterized in that the deflectable element (14) is connected to a displacement body (46) for displacing the damping medium (48).

34. Sensor as defined in any one of the preceding claims, characterized in that the emitting element (14) and the receiving element (16) are adjustable relative to each other.

35. Sensor as defined in claim 34, characterized in that the emitting element (14) and the receiving element (16) are adjustable relative to each other in the direction of propagation (32) of the bundle of light rays (30).

36. Sensor as defined in any one of the preceding claims, characterized in that the intensity signals (S1, S2, S3, S4) of each receiving surface (70, 72, 74, 76) in different deflection positions are specified to the evaluating device (82, 84, 86) as support points, and that the given deflection is determined by comparison with said support points.

37. Sensor as defined in claim 36, characterized in that the deflection is determined by interpolation between the support points.

38. Sensor as defined in any one of the preceding claims, characterized in that the set of parameters includes the parameters for the distribution of intensity (I(r)) of the bundle of light rays (30) varying transversely to the direction of propagation (32) and the parameters for the position of the receiving surface (70, 72, 74, 76).

39. Sensor as defined in any one of the preceding claims, characterized in that the set of parameters includes a value for the maximum intensity signal of the respective receiving surface (70, 72, 74, 76) for defining a deflection position.

40. Sensor as defined in any one of the preceding claims, characterized in that the evaluating device (82, 84, 86) generates an output signal corresponding to an acceleration of the sensor.

41. Sensor as defined in claim 40, characterized in that the evaluating device (82, 84, 86) takes the modulus of elasticity of the light guide (22) into account.

42. Sensor as defined in claim 40 or 41, characterized in that the evaluating device takes the modulus of elasticity of the stabilizer (52) in the direction of deflection (36, 38) into account.

43. Sensor as defined in any one of the preceding claims, characterized in that the evaluating device (82, 84, 86) detects the direction of deflection (36, 38) in relation to a reference and generates a corresponding direction signal.

44. Sensor as defined in any one of the preceding claims, characterized in that the evaluating device (82, 84, 86) comprises a read-only memory (86) for the parameters associated with the processor (84).

45. Sensor as defined in any one of the preceding claims, characterized in that the intensity signal (S1, S2, S3, S4) is converted by an analog-to-digital converter (82) and transmitted to the processor (84).

46. Sensor as defined in any one of the preceding claims, characterized in that the processor (84) is a microprocessor.

47. Sensor as defined in any one of the preceding claims, characterized in that the processor (84) controls a power stage (88) generating the output signal.

48. Redundant sensor, characterized in that at least two sensors (102, 108), each detecting two directions of deflection (104, 106; 110, 112) extending at an angle transversely to one another and generating output signals corresponding to the deflection, as defined in any one of the preceding claims, are arranged such that a first direction of deflection (104) of the one sensor (102) lies parallel to the first direction of deflection (110) of the other sensor (108), that both sensors are acted upon in the same manner in the first direction of deflection, and that an evaluating device detecting the output signals of both sensors (102, 108) for the first direction of deflection (104, 110) is provided for generating an overall output signal only in the event that output signals of the sensors (102, 108) for the first direction of deflection (104, 110) are identical.

49. Redundant sensor as defined in claim 48, characterized in that the evaluating device reports an error in the event that output signals for the first direction of deflection (104, 110) are not identical.

50. Redundant sensor as defined in claim 48 or 49, characterized in that the sensors (102, 108) are arranged such that the second directions of deflection (106, 112) extend at an angle transversely to each other.

51. Redundant sensor as defined in any one of claims 48 to 50, characterized in that three sensors (102, 108, 120), each detecting two directions of deflection (104, 106; 110, 112; 122, 124) extending at right angles to one another and generating output signals corresponding to the deflection, are arranged such that the two directions of deflection (104, 106; 110, 112; 122, 124) of one sensor (102, 108, 120) each extend parallel to one respective direction of deflection (110, 122, 104, 124, 106, 112) of one of the other sensors.

## Revendications

1. Capteur comportant un élément émetteur (14) émettant un faisceau de rayons lumineux (30) dans une direction de propagation (32), le faisceau de rayons lumineux (30) présentant, perpendiculairement à sa direction de propagation (32), une répartition de l'intensité (I(r)) qui varie le long de sa section en fonction du rayon (r), de sorte que des intensités différentes (I(r)) apparaissent à des rayons différents ((r), comportant un élément récepteur (16) qui reçoit le faisceau de rayons lumineux (30) et présente au moins une surface réceptrice (70, 72, 74, 76) pour le faisceau de rayons lumineux (30), avec une disposition de l'élément émetteur (14) par rapport à l'élément récepteur (16) telle que, lors d'une action sur le capteur, l'élément émetteur (14) peut, en ce qui concerne sa direction de déviation (36, 38), se déplacer par rapport à l'élément récepteur (16), transversalement par rapport à la direction de propagation (32) du faisceau de rayons lumineux (30), et comportant un dispositif de traitement (82, 84, 86, 88) qui produit un signal de sortie du capteur,
caractérisé
par le fait que, dans chaque position de déviation, provoquée par une action sur le capteur, de l'élément émetteur (14) par rapport à l'élément récepteur (16), une surface réceptrice (70, 72, 74, 76) n'est éclairée que par un faisceau partiel (71, 73, 75, 77) du faisceau de rayons lumineux (30), que l'élément récepteur (16) produit, pour la surface réceptrice (70, 72, 74, 76), I'intégrale du signal d'intensité (S₁, S₂, S₃, S₄) correspondant à l'intensité totale, tombant sur cette surface réceptrice (70, 72, 74, 76), du faisceau partiel (71, 73, 75, 77) éclairant respectivement cette surface, que le dispositif de traitement (82, 84, 86) saisit le signal d'intensité (S₁, S₂, S₃, S₄) et détermine la déviation à l'aide d'un processeur (84), en tenant compte de la grandeur du signal d'intensité (S₁, S₂, S₃, S₄) et d'un ensemble prescrit de paramètres déterminé sur la base de la répartition de l'intensité (I(r)), variant le long de la section en fonction du rayon (r), dans le faisceau des rayons lumineux (30) ainsi que de la grandeur et de la position de la surface réceptrice (70, 72, 74, 76).

2. Capteur selon la revendication 1, caractérisé par le fait que l'élément récepteur (16) présente plusieurs surfaces réceptrices (70, 72, 74, 76) qui sont distinctes l'une de l'autre et dont le dispositif de traitement saisit individuellement les signaux d'intensité (S₁, S₂, S₃, S₄).

3. Capteur selon la revendication 2. caractérisé par le fait qu'au moins deux surfaces réceptrices (70, 72, 74, 76) sont successivement disposées dans la direction de la déviation (36, 38).

4. Capteur selon la revendication 3, caractérisé par le fait que selon deux directions de déviation prescrites (36, 38), orientées transversalement l'une à l'autre, au moins deux surfaces réceptrices (70, 72, 74, 76) sont chaque fois successivement disposées.

5. Capteur selon l'une des revendications 2 à 4, caractérisé par le fait que, dans toute position de déviation, au moins deux des surfaces réceptrices (70, 72, 74, 76) sont éclairées par des faisceaux partiels (71, 73, 75, 77), chaque fois différents, du faisceau de rayons lumineux (30).

6. Capteur selon l'une des revendications 2 à 5, caractérisé par le fait que l'élément récepteur (16) est un photodétecteur présentant plusieurs surfaces réceptrices (70, 72, 74, 76).

7. Capteur selon la revendication 6, caractérisé par le fait que le photodétecteur (16) est une diode à quadrants.

8. Capteur selon l'une des revendications précédentes, caractérisé par le fait que l'élément récepteur (16) est conçu de façon à produire, pour chaque surface réceptrice (70, 72, 74, 76), un signal d'intensité (S₁, S₂, S₃, S₄) indépendant de l'angle d'incidence entre le faisceau partiel (71, 73, 75, 77) et la surface réceptrice respective (70, 72, 74, 76).

9. Capteur selon l'une des revendications précédentes, caractérisé par le fait que chaque surface réceptrice (70, 72, 74, 76) est formée par un matériau détecteur, sensible à la lumière, qui peut être influencé par un faisceau de rayons lumineux (30) indépendamment d'éléments de transmission fonction de la direction du rayonnement.

10. Capteur selon l'une des revendications précédentes, caractérisé par le fait que l'élément émetteur (14) comporte un guide de la lumière (22) et une source lumineuse (20) disposée à une première extrémité (24) de ce guide de la lumière et que le faisceau de rayons lumineux (30) sort à une seconde extrémité (28) du guide de la lumière (22).

11. Capteur selon la revendication 10, caractérisé par le fait que le guide de la lumière (22) comporte une fibre conductrice de la lumière.

12. Capteur selon la revendication 11, caractérisé par le fait que l'élément émetteur comporte une unique fibre conductrice de la lumière.

13. Capteur selon l'une des revendications 10 à 12, caractérisé par le fait que le guide de la lumière (22) peut se fléchir élastiquement.

14. Capteur selon l'une des revendications 11 à 13, caractérisé par le fait que le guide de la lumière (22) est un matériau polymère.

15. Capteur selon l'une des revendications 10 à 14, caractérisé par le fait que le guide de la lumière (22) est porté avec liberté de pivoter, sur une articulation (90), de préférence une articulation à cardan ou à rotule.

16. Capteur selon l'une des revendications 10 à 14, caractérisé par le fait que le guide de la lumière (22) est tenu dans un élément support élastique (96).

17. Capteur selon l'une des revendications 10 à 16, caractérisé par le fait que le guide de la lumière (22) présente, pour le faisceau de rayons lumineux, un angle d'ouverture supérieur à 25°.

18. Capteur selon l'une des revendications 10 à 17, caractérisé par le fait que le guide de la lumière (22) est gainé d'une gaine (34), de préférence non transparente à la lumière.

19. Capteur selon la revendication 18, caractérisé par le fait que la gaine (34) du guide de la lumière (22) est prévue pouvant se fléchir transversalement par rapport à l'axe longitudinal (26) et résistant de préférence au rétreint selon la direction longitudinale.

20. Capteur selon l'une des revendications 10 à 19, caractérisé par le fait que la source lumineuse (20) présente une diode électroluminescen te.

21. Capteur selon l'une des revendications précédentes, caractérisé par le fait que le glissement relatif entre l'élément émetteur (14) et l'élément récepteur (16) résulte d'une force d'inertie d'une masse (40) du capteur.

22. Capteur selon la revendication 21, caractérisé par le fait que la masse (40) du capteur agit sur l'élément émetteur (14).

23. Capteur selon l'une des revendications 10 à 22, caractérisé par le fait que l'action sur le capteur pour produire le signal de sortie s'exerce sur le guide de la lumière (22).

24. Capteur selon la revendication 23, caractérisé par le fait que l'action s'exerce sur la seconde extrémité (28), située du côté opposé à la source lumineuse (20), du guide de la lumière (22).

25. Capteur selon l'une ou plusieurs des revendications précédentes, caractérisé par le fait que l'élément émetteur (14) est disposé dans un espace intérieur d'un boîtier (12).

26. Capteur selon l'une des revendications précédentes, caractérisé par le fait que l'élément émetteur (14) est tenu dans la position initiale par un stabilisateur (52).

27. Capteur selon la revendication 26, caractérisé par le fait que le stabilisateur (52) est conçu sous forme d'élément élastique.

28. Capteur selon la revendication 26 ou 27, caractérisé par le fait que le stabilisateur agit sur la masse (40) du capteur et qu'il s'appuie sur le boîtier (12).

29. Capteur selon l'une des revendications 26 à 28, caractérisé par le fait que le stabilisateur (52) comporte un élément d'ajustement (54).

30. Capteur selon l'une des revendications 26 à 29, caractérisé par le fait que le stabilisateur (52) comporte plusieurs éléments stabilisateurs (50) disposés autour de l'axe longitudinal (26) du guide de la lumière (22), à intervalles angulaires égaux.

31. Capteur selon l'une ou plusieurs des revendications précédentes, caractérisé par le fait que sur le boîtier 12) est prévue une butée (80) pour limiter la déviation de l'élément émetteur (14) par rapport à l'élément récepteur (16).

32. Capteur selon l'une des revendications précédentes, caractérisé par le fait qu'est prévu un fluide d'amortisseur (48) amortissant la déviation.

33. Capteur selon ta revendication 32 caractérisé par le fait que l'élément (14) qui peut dévier est relié à un élément de déplacement (46) qui déplace le fluide d'amortisseur (48).

34. Capteur selon l'une des revendications précédentes, caractérisé par lc fait que l'élément émetteur (14) et l'élément récepteur (16) peuvent s'ajuster l'un par rapport à l'autre.

35. Capteur selon la revendication 34, caractérisé par le fait que l'élément émetteur (14) et l'élément récepteur (16) peuvent s'ajuster l'un par rapport à l'autre selon la direction de propagation (32) du faisceau de rayons lumineux (30).

36. Capteur selon l'une des revendications précédentes, caractérisé par le fait que les signaux d'iniensité (S₁, S₂, S₃, S₄) de chaque surface réceptrice (70, 72, 74, 76) pour des positions de déviation différentes sont prescrits au dispositif de traitement (82, 84, 86) en tant que points de base et que la détermination de la déviation effective se fait par comparaison avec les points de base.

37. Capteur selon la revendication 36, caractérisé par le fait que la détermination de la déviation se fait par interpolation entre les points de base.

38. Capteur selon l'une des revendications précédentes, caractérisé par le fait que l'ensemble de paramètres comporte des paramètres pour la répartition de l'intensité (I(r)), qui varie transversalement à la direction de propagation (32) , du faisceau de rayons lumineux (30) et des paramètres pour la position de la surface réceptrice (70, 72, 74, 76).

39. Capteur selon l'une des revendications précédentes, caractérisé par le fait que l'ensemble de paramètres pour la définition d'une position de déviation comporte une valeur pour le signal d'intensité maximale de la surface réceptrice respective (70, 72, 74, 76).

40. Capteur selon l'une des revendications précédentes, caractérisé par le fait que le dispositif de traitement (82, 84, 86) émet un signal de sortie correspondant à une accélération du capteur.

41. Capteur selon la revendication 40, caractérisé par le fait que le dispositif de traitement (82, 84, 86) prend en compte le module d'élasticité du guide de la lumière (22).

42. Capteur selon la revendication 40 ou 41, caractérisé par le fait que le dispositif de traitement prend en compte le module d'élasticité du stabilisateur (52) selon la direction de la déviation (36, 38).

43. Capteur selon l'une des revendications précédentes, caractérisé par le fait que le dispositif de traitement (82, 84, 86) saisit la direction de déviation (36, 38), rapportée à une référence, et émet un signal de direction correspondant.

44. Capteur selon l'une des revendications précédentes, caractérisé par le fait que le dispositif de traitement (82, 84, 86) présente pour les paramètres une mémoire morte (86) correspondant au processeur (84).

45. Capteur selon l'une des revendications précédentes, caractérisé par le fait que le signal d'intensité (S₁, S₂, S₃, S₄) est converti par un convertisseur analogique-numérique (82) et transmis au processeur (84).

46. Capteur selon l'une des revendications précédentes, caractérisé par le fait que le processeur (84) est un microprocesseur.

47. Capteur selon l'une des revendications précédentes caractérisé par le fait que le processeur (84) pilote un étage puissance (88) qui produit le signal de sortie.

48. Capteur redondant caractérisé par le fait qu'au moins deux capteurs (62, 108), conformes à l'une des revendications précédentes, saisissant chacun deux directions de déviation (104, 106; 110, 112) orientées transversalement l'une à l'autre et émettant des signaux de sortie correspondant à la déviation, sont disposés de façon qu'une première direction de déviation (104) du premier capteur (102) se situe parallèlement à la première direction de déviation (110) de l'autre capteur (108), que les deux capteurs subissent la même action selon la première direction de deviation et que soit prévu un dispositif de traitement qui saisit les signaux de sortie des deux capteurs (102, 108) pour la première direction de déviation (104, 110) et qui n'émet un signal de sortie total que dans le cas de signaux de sortie identiques des capteurs (102, 108) pour la première direction de déviation (104, 110).

49. Capteur redondant selon la revendication 48, caractérisé par le fait que le dispositif de traitement émet une annonce d'erreur dans le cas de signaux de sortie non identiques pour la première direction de déviation (104, 110).

50. Capteur redondant selon la revendication 48 ou 49, caractérisé par le fait que les capteurs (102, 108) sont disposés de façon que les secondes directions de déviation (106, 112) soient orientées transversalement l'une à l'autre.

51. Capteur redondant selon l'une des revendications 48 ou 50, caractérisé par le fait que trois capteurs (102, 108, 120) saisissant chacun deux directions de déviations (104, 106, 110, 112, 122, 124) orientées perpendiculairement l'une à l'autre et émettant des signaux de sortie correspondant à la déviation sont disposés de façon que chacune des deux directions de déviation (104, 106; 110, 112; 122, 14) d'un capteur (102, 108, 120) soient orientés parallèlement à l'une des directions de déviation (110, 122, 104, 124, 106, 112) de chacun des autres capteurs.
